# FASCICULE DE BREVET EUROPEEN

(11) **EP 1 916 055 B1**
(45) Date de publication et mention de la délivrance du brevet: **03.10.2012**
(21) Numéro de dépôt: 07291272.8
(22) Date de dépôt: 19.10.2007
(51) Int. Cl.: B05D 7/22, B32B 1/08, B32B 15/18, B32B 27/32, B32B 27/34, B23P 9/04, B29C 41/08, B32B 15/08, F16L 9/147, F16L 58/10

(54) **Tuyau et son procédé de fabrication**
Rohr und sein Herstellungsverfahren
Pipe and method of manufacturing

(30) Priorité: 26.10.2006 FR 0609422
(43) Date de publication de la demande: 30.04.2008
(60) Demande divisionnaire: 10184052.8
(73) Titulaire: Saint-Gobain PAM, 54000 Nancy (FR)
(72) Inventeur: Cohen, Marc, 54700 Pont-à-Mousson (FR); Guyonnet, Laurence, 54700 Pont-à-Mousson (FR); Mutis, Roger, 57420 Cheminot (FR)
(74) Mandataire: Domenego, Bertrand

(56) Documents cités:
- US-A- 2 724 672
- US-A- 3 356 108
- US-A- 5 205 886
- US-A- 5 207 248

## Description

La présente invention concerne un tuyau, du type comprenant :
- un corps de base en métal, définissant une surface extérieure du corps de base et une surface intérieure de corps de base, et
- un revêtement intérieur appliqué sur la surface intérieure du corps de base.

On connaît dans l'état de la technique des tuyaux de transport d'eau potable, notamment utilisés dans le domaine de l'adduction d'eau.

Ces tuyaux comprennent un corps de base en métal sur la surface intérieure duquel est appliqué un revêtement intérieur apte au contact avec des denrées alimentaires. Les revêtements généralement utilisés demandent une préparation de la surface intérieure du corps de base afin que le revêtement puisse adhérer. Les procédés de préparation de la surface intérieure sont habituellement soit le grenaillage seul, soit le meulage, ou encore une combinaison d'un alésage et d'un grenaillage.

Ces procédés de préparation de la surface intérieure du corps de base sont coûteux. Ceci est particulièrement valable pour le grenaillage en raison du temps et du coût afférents au recyclage des grenailles.

Par ailleurs, ces procédés de préparation de la surface nécessitent parfois l'utilisation d'un primaire afin d'obtenir l'adhérence requise du revêtement.

L'invention a pour but de réduire les coûts de fabrication du tuyau.

A cet effet, l'invention a pour objet un tuyau du type précité, le revêtement intérieur comprenant une matière thermoplastique à base de polyoléfines ou à base de polyamide.

Selon des modes de réalisation particuliers, le tuyau selon l'invention comporte l'une ou plusieurs des caractéristiques suivantes :
- le revêtement intérieur est constitué d'une matière thermoplastique et de matière acrylique ;
- le corps de base est en fonte, en particulier en fonte à graphite sphéroïdale ;
- le corps de base a une épaisseur de paroi moyenne inférieure à 4 mm;
- la surface intérieure est obtenue par martelage.

L'invention a en outre pour objet un procédé de fabrication, qui comprend les étapes
a) enlèvement d'aspérités d'une surface intérieure brute d'un corps de base obtenant ainsi une surface intérieure partiellement alésée, l'enlèvement des aspérités étant effectué par un alésage partiel de la surface intérieure brute ;
b) enlèvement au moins partiel d'une couche d'oxyde par martelage de la surface intérieure alésée en obtenant une surface intérieure martelée ;
c) application d'un revêtement intérieur sur la surface intérieure martelée, ce revêtement comprenant un thermoplastique à base de polyoléfines ou à base de polyamide.

Selon des modes de réalisation particuliers, le procédé selon l'invention comporte l'une ou plusieurs des caractéristiques suivantes :
- le revêtement intérieur est constitué d'une matière thermoplastique et d'une matière acrylique ;
- l'étape d'application du revêtement intérieur comprend la projection de particules solides de revêtement sur la surface du corps de base ; et
- avant l'étape d'application du revêtement, le corps de base est chauffé à une température de fusion des particules de revêtement ;
- qu'avant l'étape d'application de revêtement, on enlève des résidus d'alésage et de martelage, notamment par aspiration ou soufflage ;
- qu'avant l'étape d'alésage, une étape supplémentaire de fabrication du corps de base en fonte, en particulier en fonte à graphite sphéroïdale, est mise en oeuvre.

Pour la mise en oeuvre, on pourra utiliser un outil de traitement de surface intérieure d'un corps de base d'un tuyau, l'outil définissant un axe central, et comprenant
- un tronçon axial d'alésage muni d'au moins une lame d'alésage radialement mobile par rapport à l'axe central de l'outil, et
- un tronçon axial de martelage muni au moins d'un premier élément de martelage radialement mobile par rapport à l'axe central de l'outil et libre en rotation autour d'un axe propre s'étendant parallèlement à l'axe central de l'outil.

Par ailleurs, l'outil de traitement de surface peut comporter la caractéristique suivante :
le tronçon axial de martelage comprend un deuxième élément de martelage radialement mobile par rapport à l'axe central et libre en rotation autour d'un axe propre s'étendant parallèlement à l'axe central de l'outil.

L'invention sera mieux comprise à la lecture de la description qui va suivre, donnée uniquement à titre d'exemple et faite en se référant aux dessins annexés, sur lesquels :
- la Figure 1 est une vue en coupe longitudinale d'un corps de base d'un tuyau à l'état brut;
- la Figure 2 est une vue du corps de base de tuyau de la Figure 1 pendant une étape de préparation de surface utilisant un outil de traitement de surface selon l'invention ;
- la Figure 3 est une vue du corps de base pendant une étape de revêtement du procédé selon l'invention ;
- la Figure 4 est une vue en coupe longitudinale du tuyau fini selon l'invention; et
- la Figure 5 est une vue en coupe longitudinale d'un outil de traitement de surface utilisé pour la préparation de la surface du corps de base.

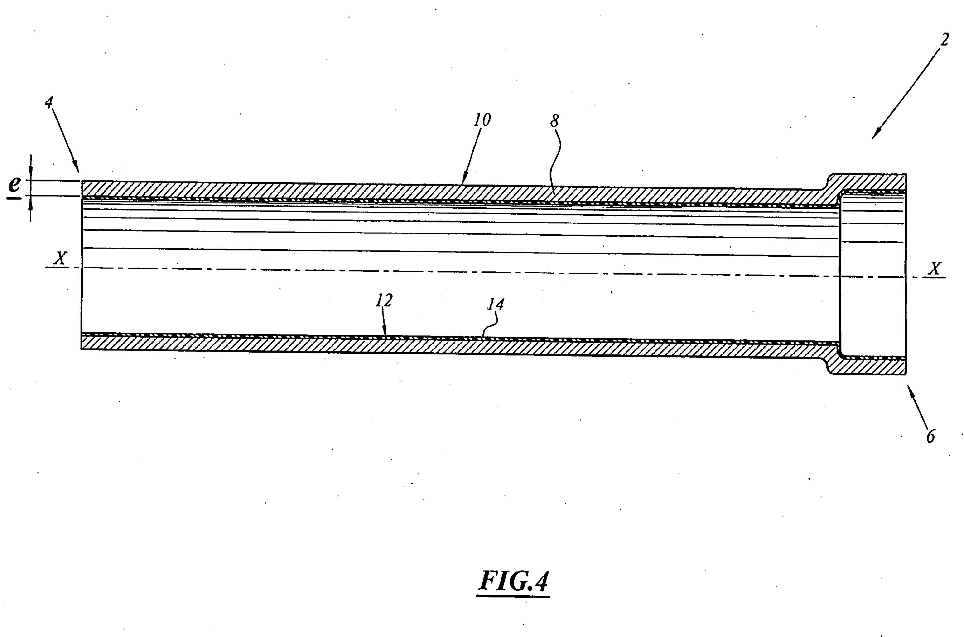

Sur la Figure 4 est représenté un tuyau selon l'invention, désigné par la référence générale 2.

Ce tuyau 2 s'étend selon un axe central X-X et présente une première extrémité ayant un bout uni 4 ainsi qu'une seconde extrémité comprenant un bout à emboîtement 6.

Le tuyau 2 est constitué d'un corps de base 8, fabriqué par exemple en fonte, et notamment en fonte à graphite sphéroïdale. Ce corps de base 8 définit une surface extérieure 10 de corps de base et une surface intérieure 12 de corps de base.

La surface extérieure 10 est dans le cas du tuyau 2 une surface libre, mais peut aussi être revêtue d'un revêtement extérieur.

Le tuyau 2 comporte en outre un revêtement intérieur 14 appliqué sur la surface intérieure 12. Le revêtement intérieur 14 est en une matière possédant tous les agréments sanitaires européens, de telle sorte que le tuyau 2 est adapté pour transporter de l'eau potable, notamment dans le domaine de l'adduction d'eau.

Selon l'invention, le revêtement intérieur 14 comprend une matière thermoplastique qui peut être à base de polyoléfines ou à base de polyamide. D'une manière préférentielle, le revêtement intérieur 14 est constitué d'une matière thermoplastique et d'une matière acrylique. Grâce à ces matières, le revêtement intérieur 14 adhère bien à la surface intérieure 12.

La matière polyamide peut par exemple être un polyamide 11 ou 12 (NYLON^{®}).

La matière thermoplastique peut par exemple comprendre du polyéthylène fonctionnalisé par copolymérisation avec un acrylique.

L'utilisation de ce revêtement intérieur 14 permet de fabriquer le corps de base 8 avec une épaisseur de paroi e particulièrement faible. L'épaisseur de paroi e est par exemple en moyenne inférieure à 4 mm. L'épaisseur du revêtement 14 est par exemple inférieure à 1 mm.

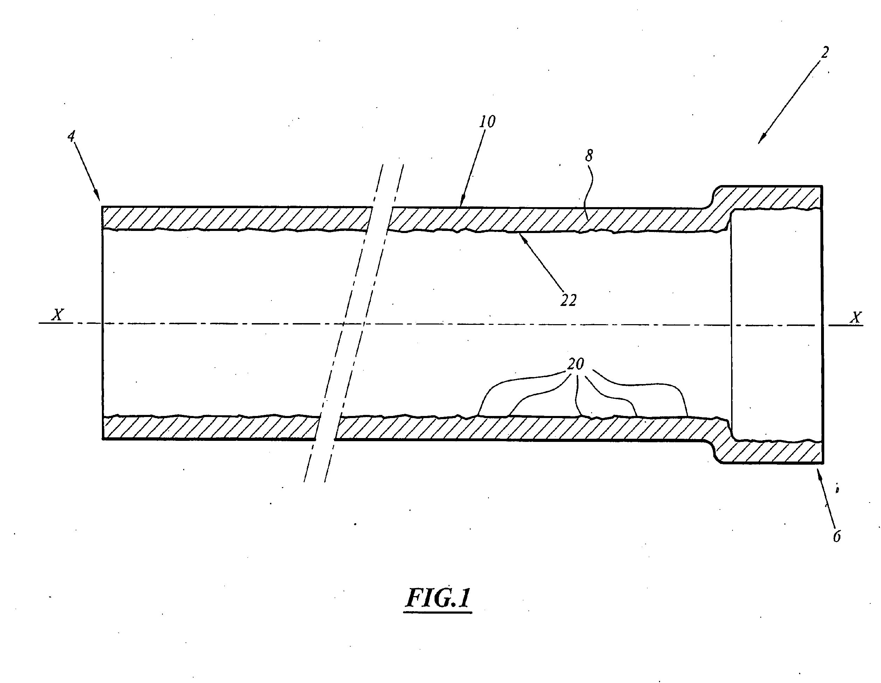

Sur les Figures 1 à 3 sont représentées des étapes du procédé de fabrication du tuyau 2 selon l'invention.

Dans une première étape, le corps de base 8 est fabriqué par exemple par coulée d'un métal fondu ou d'un alliage métallique fondu, et notamment par coulée centrifuge. Le corps de base 8 brut obtenu comporte une surface intérieure brute 22 qui est munie d'aspérités 20 qui font saillie radialement vers l'intérieur par rapport à l'axe X-X. Par ailleurs, la surface intérieure brute 22 est recouverte d'une couche d'oxydes de fer non représentée qui est néfaste à l'adhérence du revêtement intérieur 14.

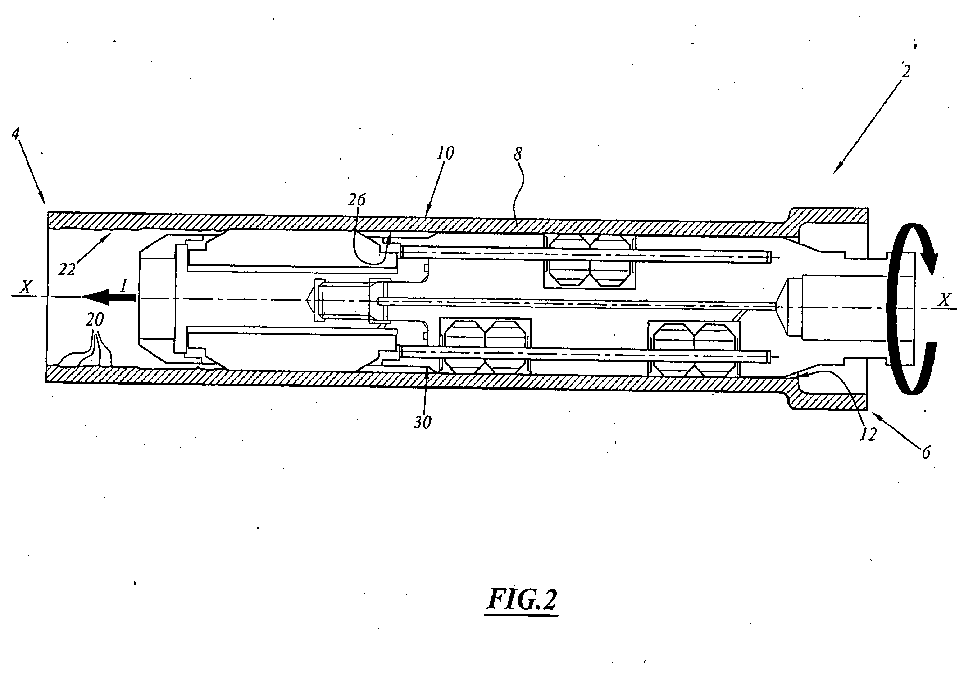

Lors d'une deuxième étape, montrée sur la Figure 2, les aspérités 20 sont enlevées de la surface intérieure brute 22 par un alésage partiel de cette surface 22, obtenant ainsi une surface alésée 26.

La surface alésée 26 comporte des parties libres, non oxydées, des parties ayant une couche d'oxyde à forte adhérence et des parties à couche d'oxyde à faible adhérence. Les parties à couche d'oxyde à faible adhérence qui subsistent sur la surface alésée 26 sont ensuite enlevées lors d'une troisième étape par martelage de la surface intérieure alésée 26 en obtenant la surface intérieure martelée 12 finie.

La deuxième et la troisième étapes sont effectuées au moyen d'un outil de traitement de surface 30.

Pendant ou après l'alésage et le martelage, des résidus d'alésage et de martelage sont enlevés de l'intérieur du corps de base 10, par exemple par aspiration ou par soufflage.

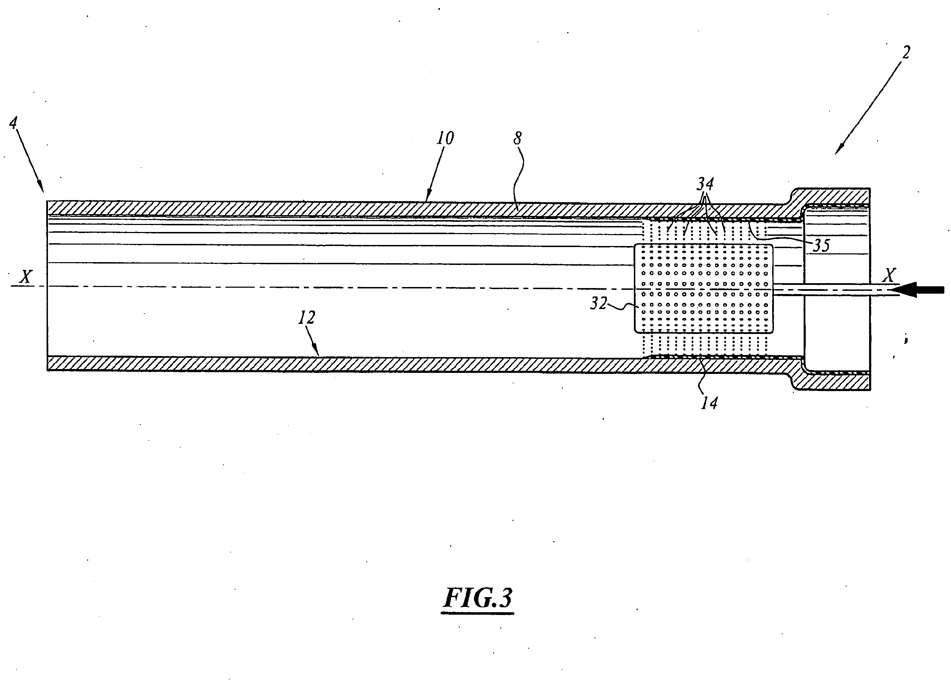

Sur la Figure 3 est représentée l'étape d'application du revêtement intérieur 14 sur le corps de base 8.

A cet effet, le corps de base 8 est chauffé au delà de la température de fusion du revêtement, par exemple à une température comprise entre 220 et 300°C, et plus particulièrement à une température de 250°C.

Une fois le corps de base 8 ayant atteint la température de fusion, une tête de projection 32 est introduite suivant un déplacement parallèle à l'axe X-X dans le corps de base 8 et projette des particules solides de revêtement 34 radialement vers l'extérieur contre la surface intérieure 12 du corps de base 8. Lorsque les particules 34 entrent en contact avec la surface intérieure 12, elles fondent et mouillent cette surface 12 en formant une couche de revêtement liquide 35. Ensuite, le corps de base 8 et la couche de revêtement liquide 35 sont refroidis à la température ambiante, et la couche de revêtement intérieur 14 est obtenue par solidification.

Il est à noter qu'entre l'étape de martelage et l'étape d'application des particules de revêtement 34, la surface 12 n'est pas traitée, et en particulier ne nécessite pas d'application d'un primaire d'accrochage.

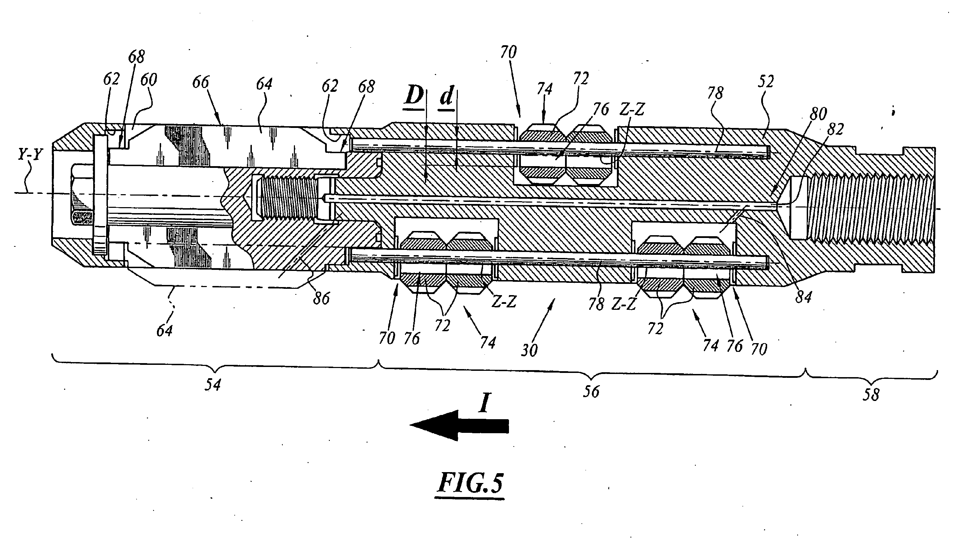

Sur la Figure 5 est représenté l'outil de traitement 30 de surface utilisé pour traiter la surface intérieure du corps de base 8.

L'outil de traitement de surface 30 comporte un corps de base 52 sensiblement cylindrique.

L'outil 30 définit un axe central Y-Y, qui est coaxial à l'axe X-X lors de l'opération de traitement.

L'outil de traitement de surface 30 est muni d'un premier tronçon axial 54 d'alésage, et un deuxième tronçon axial de martelage 56, ainsi que d'un tronçon axial de fixation 58. Le tronçon d'alésage 54 forme une première extrémité axiale de l'outil 30 et le tronçon de fixation 58 forme une seconde extrémité axiale de cet outil 30.

Le tronçon d'alésage 54 comporte plusieurs logements 60. Chaque logement 60 est radialement ouvert et délimite deux surfaces de butée 62 dirigées radialement vers l'intérieur. Une lame d'alésage 64 est insérée dans chaque logement 60. La lame 64 délimite une arête d'alésage 66, radialement extérieure, et comporte deux surfaces de butée 68 complémentaires des surfaces de butée 62.

Les logements 60 et les lames d'alésage 64 sont conçus de telle manière que la lame d'alésage 64 est radialement mobile par rapport à l'axe Y-Y entre une position rétractée et une position sortie. La position rétractée de la lame d'alésage 64 est représentée sur la partie supérieure de la Figure 5, tandis que la position sortie de la lame d'alésage 64 est représentée en traits interrompus sur la partie inférieure de la Figure 5. Il est à noter que la position sortie de la lame d'alésage 64 est délimitée par application de la surface de butée 68 contre la surface de butée 62.

Par ailleurs, les lames d'alésage 64 sont librement mobiles entre leurs positions sortie et rétractée, c'est-à-dire ne sont pas sollicitées par un ressort, ni par d'autres moyens d'application de force mécanique.

Le tronçon axial de martelage 56 dispose d'une pluralité d'évidements 70 radialement ouverts vers l'extérieur. L'outil montré sur la Figure 5 comporte trois groupes d'évidements 70, décalés axialement l'un de l'autre. Chaque groupe d'évidements 70 est constitué par trois évidements 70 répartis circonférentiellement autour de l'axe Y-Y. Des éléments de martelage sont reçus dans chaque évidement 70. En l'occurrence, chaque élément de martelage est constitué par une molette 72 de forme générale cylindrique. Dans chaque évidement 70 sont disposées deux molettes 72 axialement décalées l'une de l'autre. Chaque molette 72 délimite une surface de martelage 74. La surface de martelage 74 est munie de stries de martelage. Les stries de martelage peuvent s'étendre parallèlement à l'axe Y-Y ou être inclinées par rapport à cet axe. Dans le cas où ces stries de martelage sont inclinées par rapport à l'axe Y-Y, deux molettes 72 disposées dans le même évidement 70 ont des stries de martelage ayant des sens d'inclinaison différents.

Chaque molette 72 est munie d'un alésage central 76 ayant un axe propre Z-Z.

Le tronçon de martelage 56 est en outre muni de tiges de retenue 78 qui traversent axialement les évidements 70 et qui traversent l'alésage central 76 des molettes 72 associées. La dimension radiale ou le diamètre d des tiges 78 est inférieur à la dimension radiale ou au diamètre D de l'alésage central 76. Ainsi, les molettes 72 sont radialement mobiles entre une position rétractée, dans laquelle la surface de martelage 74 affleure sensiblement la surface extérieure du corps de base 52, et une position sortie, dans laquelle la surface de martelage 74 s'étend radialement au-delà de l'arête 66 lorsque la lame d'alésage 64 est dans sa position sortie.

En variante, d'autres moyens de retenue radiale à jeu que les tiges 78 peuvent être envisagés pour les molettes 72. De même, en variante, d'autres éléments de martelage, par exemple des sphères, peuvent être envisagés.

L'outil 30 comprend en outre des moyens de soufflage 80 adaptés pour souffler des résidus d'alésage et de martelage hors du corps de base 8. Ces moyens de soufflage 80 comportent un alésage central 82 ménagé dans le corps de base 52. Des premiers alésages de piquage 84 relient l'alésage central 82 aux évidements 70. Des seconds alésages de piquage 86 relient l'alésage central 82 à la surface extérieure du corps de base 52 au niveau du tronçon d'alésage 54.

Lors de l'opération de traitement de surface, l'alésage central 82 est alimenté en air comprimé qui s'échappe par les alésages de piquage 84, 86.

Afin de traiter la surface, l'outil 30 est entraîné en rotation autour de l'axe Y-Y, par exemple de 1500 tours/min, et est introduit axialement selon un sens d'introduction I dans le corps de base 8. Par la force centrifuge, les arêtes 66 sont sollicitées vers les surfaces de butée 62. Les lames 64 entrent successivement en contact avec les aspérités 20 du corps de base 8 et séparent celles-ci du corps de base.

De même, les molettes 72 sont sollicitées vers leur position sortie par la force centrifuge, et entrent successivement en contact avec la surface oxydée alésée 26 qui subsiste après le passage des lames d'alésage.

Le contact frappant et roulant des molettes 72 sur la surface alésée 26 enlève la peau d'oxyde éventuellement présente et non adhérente au corps de base 8. De plus, la surface 74 crée une rugosité favorisant l'adhérence du revêtement 14.

On constate que le traitement avec l'outil 30 selon l'invention permet d'appliquer directement le revêtement intérieur 14 sur la surface intérieure 12 du corps de base, ainsi économisant un primaire.

De même, la durée de traitement de la surface par une lame d'alésage 64 et par les éléments de martelage 72 est plus courte que la durée de traitement par grenaillage. En outre, les coûts afférents à la matière de grenaillage et au recyclage de celle-ci sont économisés.

De même, la composition telle qu'indiquée plus haute du revêtement 14 permet une adhérence particulièrement élevée et une bonne résistance à l'usure.

## Revendications

1. Tuyau, du type comprenant :
- un corps de base (8) en métal, définissant une surface extérieure (10) du corps de base et une surface intérieure (12) de corps de base, et
- un revêtement intérieur (14) appliqué sur la surface intérieure (12) du corps de base,
le revêtement intérieur (14) comprenant une matière thermoplastique à base de polyoléfines ou à base de polyamide, **caractérisé en ce que** le corps de base (8) est en fonte.

2. Tuyau.selon la revendication 1, **caractérisé en ce que** le revêtement intérieur (14) est constitué d'une matière thermoplastique et de matière acrylique.

3. Tuyau selon l'une quelconque des revendications 1 ou 2, **caractérisé en ce que** le corps de base (8) est en fonte à graphite sphéroïdale.

4. Tuyau selon la revendication 3, **caractérisé en ce que** le corps de base (8) a une épaisseur de paroi moyenne inférieure à 4 mm.

5. Tuyau selon l'une quelconque des revendications 1 à 4, **caractérisé en ce que** la surface intérieure (14) est obtenue par martelage.

6. Procédé de fabrication d'un tuyau, **caractérisé en ce qu'**il comprend les étapes
a) enlèvement d'aspérités (20) d'une surface intérieure brute (22) d'un corps de base (8) obtenant ainsi une surface intérieure partiellement alésée (26), l'enlèvement des aspérités étant effectué par un alésage partiel de la surface intérieure brute (22);
b) enlèvement au moins partiel d'une couche d'oxyde par martelage de la surface intérieure alésée (26) en obtenant une surface intérieure martelée (12);
c) application d'un revêtement intérieur (14) sur la surface intérieure martelée (12), ce revêtement comprenant un thermoplastique à base de polyoléfines ou à base de polyamide, et **en ce qu'**avant l'étape d'alésage, une étape supplémentaire de fabrication du corps de base en fonte est mise en oeuvre.

7. Procédé selon la revendication 6, **caractérisé en ce que** le revêtement intérieur (14) est constitué d'une matière thermoplastique et d'une matière acrylique.

8. Procédé selon l'une quelconque des revendications 6 ou 7, **caractérisé en ce que**
- l'étape d'application du revêtement intérieur (14) comprend la projection de particules solides (34) de revêtement sur la surface du corps de base (8) et
- avant l'étape d'application du revêtement, le corps de base (8) est chauffé à une température de fusion des particules de revêtement (34).

9. Procédé selon l'une quelconque des revendications 6 à 8, **caractérisé en ce qu'**avant l'étape d'application de revêtement, on enlève des résidus d'alésage et de martelage, notamment par aspiration ou soufflage.

10. Procédé selon l'une quelconque des revendications 6 à 9, **caractérisé en ce que** l'étape de fabrication du corps de base est une étape de fabrication du corps de base en fonte à graphite sphéroïdale.

## Claims

1. Pipe, of the type comprising:
- a base body (8) of metal, defining an outer surface (10) of the base body and an inner surface (12) of the base body, and
- an inner coating (14) which is applied to the inner surface of the base body,
the inner coating comprising a thermoplastic material based on polyolefines or based on polyamide, **characterized in that** the base body (8) is of cast iron.

2. Pipe according to claim 1, **characterized in that** the inner coating (14) is constituted by a thermoplastic material and an acrylic material.

3. Pipe according to claim 1 or 2, **characterized in that** the base body (8) is of spheroidal graphite iron.

4. Pipe according to claim 3, **characterized in that** the base body (8) has a mean wall thickness of less than 4 mm.

5. Pipe according to any one of claims 1 to 4, **characterized in that** the inner surface (14) is obtained by means of hammering.

6. Method for producing a pipe, wherein it comprises the steps involving:
a) removing rough portions (20) from an unprocessed inner surface (22) of a base body, thus obtaining an inner surface (26) which is partially drilled, the removal of the rough portions being carried out by means of partial drilling of the unprocessed inner surface (22);
b) at least partially removing a layer of oxide by hammering the drilled inner surface (26), a hammered inner surface being obtained (12);
c) applying an inner coating (14) to the hammered inner surface, this coating comprising a thermoplastic material based on polyolefines or based on polyamide, **characterized in that**, before the drilling step, a supplementary step for producing the base body from cast iron, is implemented.

7. Method according to claim 6, **characterized in that** the inner coating (14) is constituted by a thermoplastic material and an acrylic material.

8. Method according to claim 6 or 7, **characterized in that**:
- the step for application of the inner coating (14) involves the projection of solid particles (34) of coating onto the surface of the base body (8) and,
- before the step for application of the coating, the base body (8) is heated to a fusion temperature of the coating particles (34).

9. Method according to any one of claims 6 to 8, **characterized in that**, before the step for application of the coating, the drilling and hammering residues are removed, in particular by means of suction or blowing.

10. Method according to any one of claims 6 to 9, **characterized in that** the supplementary step for producing the base body is a step for producing the base body from from spheroidal graphite iron.

## Patentansprüche

1. Rohr von dem Typ, der umfasst:
- einen Grundkörper (8) aus Metall, der eine Außenfläche (10) des Grundkörpers und eine Innenfläche (12) des Grundkörpers definiert, und
- eine Innenauskleidung (14), die auf die Innenfläche (12) des Grundkörpers aufgebracht ist,
wobei die Innenauskleidung (14) ein thermoplastisches Material auf Polyolefinbasis oder auf Polyamidbasis umfasst, **dadurch gekennzeichnet, dass** der Grundkörper (8) gegossen ist.

2. Rohr nach Anspruch 1,
**dadurch gekennzeichnet, dass** die Innenauskleidung (14) aus einem thermoplastischen Material und aus Acrylmaterial gebildet ist

3. Rohr nach einem der Ansprüche 1 oder 2,
**dadurch gekennzeichnet, dass** der Grundkörper (8) aus Kugelgraphitguss ist.

4. Rohr nach Anspruch 3,
**dadurch gekennzeichnet, dass** der Grundkörper (8) eine mittlere Wanddicke von weniger als 4 mm aufweist.

5. Rohr nach einem der Ansprüche 1 bis 4,
**dadurch gekennzeichnet, dass** die Innenfläche (14) durch Hämmerung erhalten ist.

6. Verfahren zum Herstellen eines Rohrs,
**dadurch gekennzeichnet, dass** es die Schritte umfasst
a) Entfernung von Unebenheiten (20) einer rohen Innenfläche (22) eines Grundkörpers (8), wodurch eine teilweise ausgedrehte Innenfläche (26) erhalten wird, wobei die Entfernung der Unebenheiten durch ein teilweises Ausdrehen der rohen Innenfläche (22) bewirkt wird;
b) zumindest teilweise Entfernung einer Oxidschicht durch Hämmerung der ausgedrehten Innenfläche (26), wobei eine gehämmerte Innenfläche (12) erhalten wird;
c) Aufbringung einer Innenauskleidung (14) auf die gehämmerte Innenfläche (12), wobei diese Auskleidung ein Thermoplast auf Polyolefinbasis oder auf Polyamidbasis umfasst, und dass vor dem Ausdrehschritt ein zusätzlicher Schritt einer Anfertigung eines Gussgrundkörpers durchgeführt wird.

7. Verfahren nach Anspruch 6,
**dadurch gekennzeichnet, dass** die Innenauskleidung (14) aus einem thermoplastischen Material und aus einem Acrylmaterial gebildet wird.

8. Verfahren nach einem der Ansprüche 6 oder 7,
**dadurch gekennzeichnet, dass**
- der Aufbringungsschritt der Innenauskleidung (14) das Ausstoßen fester Auskleidungspartikel (34) auf die Oberfläche des Grundkörpers (8) umfasst, und
- vor dem Schritt der Aufbringung der Auskleidung der Grundkörper (8) auf eine Schmelztemperatur der Auskleidungspartikel (34) erwärmt wird.

9. Verfahren nach einem der Ansprüche 6 bis 8,
**dadurch gekennzeichnet, dass** vor dem Aufbringungsschritt der Auskleidung Reste des Ausdrehens und der Hämmerung, insbesondere durch Saugen oder Blasen, entfernt werden.

10. Verfahren nach einem der Ansprüche 6 bis 9,
**dadurch gekennzeichnet, dass** der Schritt der Anfertigung des Grundkörpers ein Schritt einer Anfertigung des Grundkörpers aus Kugelgraphitguss ist.
